# EUROPEAN PATENT APPLICATION

(11) **EP 2 557 431 A1**
(43) Date of publication of application: **13.02.2013**
(21) Application number: 12179300.4
(22) Date of filing: 03.08.2012
(51) Int. Cl.: G01S 3/786, F24J 2/38, F24J 2/54, H01L 31/042, F24J 2/00

(54) **Solar panel tracking system and associated tracking sensor**

(30) Priority: 09.08.2011 US 201113205736
(71) Applicant: GENERAL ELECTRIC COMPANY, Schenectady, NY 12345 (US)
(72) Inventor: Qador, Jawed, Atlanta, GA Georgia 30339 (US)
(74) Representative: Picker, Madeline Margaret

(57) **Abstract**

A solar tracking system (40) for active tracking of a solar panel array (10) relative to the sun's position includes at least two photovoltaic (PV) sensors (42) disposed along a common axis (46) at opposite cardinal headings. A shadow structure (48) is configured with the PV sensors, wherein the PV sensors are oriented relative to the shadow structure such that one of the sensors lies at least partially in a shadow (50) cast by the shadow structure at tilt angles of the sensor on either side of a null position of the PV sensors, with the null position defmed when the PV sensors are exposed to equal solar irradiance (64).

## Description

### BACKGROUND OF THE INVENTION

The present invention relates generally to solar panel tracking systems, and more particularly to a single or dual axis tracking system having an improved solar sensor.

Solar energy systems using thin film photovoltaic (PV) modules are gaining wide acceptance as a commercial and residential alternate energy source. However, the advantages of such systems not withstanding, sustainable commercial exploitation and acceptance of solar power as a supplemental or primary source of industrial or residential power depends on the ability to produce power on a large scale and in a cost effective manner in terms of cost per watt of power generated. Accordingly, the solar power industry is constantly seeking means to increase the efficiency of their systems.

In this regard, solar tracking systems have been developed to automatically orient solar panel arrays toward the sun as the sun traverses its east to west path and also changes its position (higher or lower) in the sky over the course of the year (which can vary by as much as 30° depending on latitude). It has been estimated that a single axis solar tracking system can increase electrical output from a solar array by up to 30%, and that a dual axis system may yield a 45% or higher output as compared to fixed axis arrays.

Conventional solar tracking systems utilize photosensors mounted on or near the solar panel array that produce proportional signals utilized by a controller to change the horizontal or vertical axis position of the array. The sensors are typically arranged at cardinal heading positions and produce a measurable output that is proportional to the magnitude of incident sunlight on their respective sensor surfaces. The controller drives the array (e.g., via motors or actuators) to essentially achieve a "null" position wherein oppositely positioned photosensors (i.e., 180° apart) produce the same magnitude response signal, which indicates that the sensors (and thus the solar panel array) are oriented generally perpendicular to the sun's incident rays. It should thus be appreciated that the overall effectiveness of the tracking system is largely dependent on the accuracy and responsiveness of the photosensors.

Conventional tracking systems typically use cadmium-sulfide (CdS) photo sensors. However, these sensors have a non-linear luminosity-to-resistance curve and the characteristics may vary widely from one sensor to another, which is detrimental to the accuracy of the tracking system. In an article entitled "Dual Axis Sun Tracking System with PV Panel as the Sensor, Utilizing Electrical Characteristic of the Solar Panel to Determine Insolation" by Freddy Wilyanto Suwandi (posted June, 2011), the author discusses drawbacks with photo sensors used in conventional tracking systems and proposes a dual axis tracking system "without external light sensors." The system instead uses the short circuit current and/or open circuit voltage of the PV cells in the collector array as inputs to the control system.

U.S. Pat. No. 7,847,182 describes a sensor for a solar tracking system wherein the individual photo sensors are symmetrically mounted on the solar panel and surrounded by individual sleeves, with each sleeve having an inclined opening with reference to the panel's surface. The sleeves serve to eliminate light reflectance on certain photo sensors while increasing reflectance on polar opposite sensors, thereby increasing the difference in brightness sensed by the solar sensors for a given light condition and corresponding sensitivity of the system.

Accordingly, there exists an ongoing need in the industry for advances in solar tracking systems that improve the accuracy and responsiveness of the systems without appreciably adding to the overall cost and complexity of the systems.

### BRIEF DESCRIPTION OF THE INVENTION

In accordance with an embodiment of the invention a solar tracking system for active tracking of a solar panel array relative to the sun's position includes a plurality of photovoltaic (PV) sensors, wherein at least two of said PV sensors are disposed along a common axis at opposite cardinal headings. A shadow structure is configured with each of the PV sensors, wherein the PV sensors are oriented relative to the shadow structure such that one of the PV sensors lies at least partially in a shadow cast by the shadow structure at tilt angles of the sensors on either side of a null position of the PV sensors. The null position is defined when the PV sensors are exposed to equal solar irradiance.

The shadow structure may be variously configured. For example, the structure may be a wall or like structure to each of the PV sensors. In a particular embodiment, the PV sensors may be configured on a common sensor base that has vertically oriented side walls, with each PV sensor mounted to a respective side wall at a distance below a top edge of the side wall. With this configuration, the portion of the wall that extends above the top edge of the sensors defines the shadow structure.

The solar tracking system may be a single axis tracking system that utilizes two of the PV sensors at opposite cardinal headings. A single tracking system may adjust a solar panel array along a north-south control axis or an east-west control axis. The system may be a dual axis tracking system that utilizes four of the PV sensors at respective cardinal headings. A dual-axis system may adjust the solar panel array along a north-south control axis and an east-west control axis.

The PV sensors may be disposed on support structure, such as the side walls of a common base, at an angle relative to the side wall in the range of from 30° to 90°, for example at 45° relative to the side wall.

The solar tracking system may also a controller in communication with the PV sensors, and a drive device in communication with the controller, wherein the controller generates a drive signal for the drive device as a function of a differential between signals generated by the PV sensors in response to solar irradiance on the PV sensors. For example, the PV sensors may be mounted to a solar panel, with the drive device configured to move the solar panel relative to a first control axis in response to the drive signal in order to bring the PV sensors to the null position, which corresponds to a position of the solar panel that is essentially perpendicular to the sun's rays.

The invention also encompasses various embodiments of an active-tracking solar panel array having an array of one or mole solar panels mounted on a support structure. A drive device is configured with the support structure to move the array relative to a first control axis. In a dual axis system, a drive device is provided to move the array relative to a second control axis. The solar panel array includes an active tracking system configured in accordance with any of the embodiments set forth above and described in greater detail herein.

These and other features, aspects, and advantages of the present invention will become better understood with reference to the following description and appended claims, or may be obvious from the description or claims, or may be learned through practice of the invention.

### BRIEF DESCRIPTION OF THE DRAWINGS

A full and enabling disclosure of the present invention, including the best mode thereof, is set forth in the specification, which makes reference to the appended drawings, in which:
Fig. 1 is a perspective view of a conventional solar panel array with a dual axis tracking system;
Fig. 2 is a side view of a solar panel array with a dual axis tracking system in accordance with an embodiment of the invention;
Fig. 3 is a block diagram of a control system for an active solar tracking system;
Fig. 4 is an operational diagram of a PV sensor configuration at a first position relative to the sun;
Fig. 5 is a curve of solar irradiance relative to incidence angle and shows the relative signal values generated by the sensors in Fig. 4;
Fig. 6 is an operational diagram of a PV sensor configuration at a second position relative to the sun;
Fig. 7 is a curve of solar irradiance relative to incidence angle and shows the relative signal values generated by the sensors in Fig. 6;
Fig. 8 is an operational diagram of a PV sensor configuration at a null position relative to the sun;
Fig. 9 is a curve of solar irradiance relative to incidence angle and shows the relative signal values generated by the sensors in Fig. 8;
Fig. 10 is an operational diagram of a PV sensor configuration at an over-adjusted position past the null position relative to the sun; and,
Fig. 11 is a curve of solar irradiance relative to incidence angle and shows the relative signal values generated by the sensors in Fig. 10.

### DETAILED DESCRIPTION OF EMBODIMENTS OF THE INVENTION

Reference now will be made in detail to embodiments of the invention, one or more examples of which are illustrated in the drawings. The same reference characters are used to identify the same or like structure in the drawings and description. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment, can be used with another embodiment to yield a still further embodiment. Thus, it is intended that the present invention encompass such modifications and variations as come within the scope of the appended claims and their equivalents.

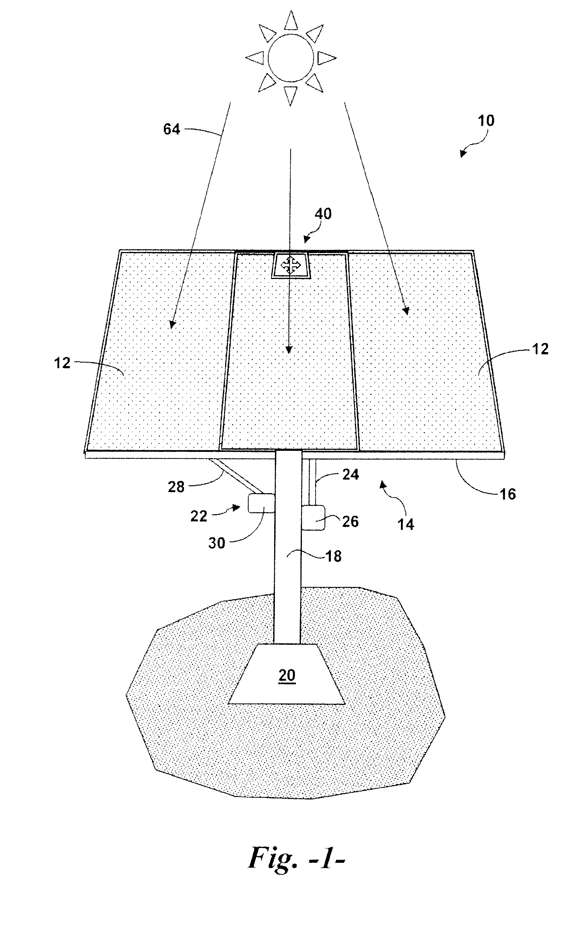

Fig. 1 illustrates an embodiment of a solar panel array 10 that incorporates an active solar tracking system 40 in accordance with aspects of the invention. The array 10 includes one or more solar panels 12 of any suitable conventional design mounted on support structure 14. The support structure 14 may include, for example, a frame 16 in which the solar panels 12 are mounted, with the frame 16 supported on a vertical tower or post 18. The post 18 may, in turn, be supported on a base 20. It should be readily appreciated that any manner of suitable support structure configuration 14 is within the scope and spirit of the invention, and that the invention is not limited to any particular type of structure. In addition, the invention is not limited to any particular type of solar panels 12. For example, the solar panels 12 may be commercially available thin-film photovoltaic panels. The construction and operation of these panels is well known to those skilled in the art and a detailed description of the panels 12 is not necessary for an appreciation of the present invention.

Still referring to Fig. 1, an active solar tracking system 40 is incorporated with the array 10 to automatically position or orient the collection faces of the solar panels 12 relative to the sun's incident rays 64 to increase output from the solar panels 12. The tracking system 40 may cooperate with any manner of suitable drive devices 22 for positioning the solar panels 12. For example, in a single-axis system, a drive device 22 is utilized to move the solar panels 12 (via the frame structure 16) in a single control direction or axis, for example to track the sun's movement in an east-west direction. In a dual-axis tracking system, the solar panels 12 are automatically positioned along an additional control axis, for example to track the sun's changing position in the sky in a north-south direction. Single and dual-axis tracking systems are known in the art and the principles of operation of such systems need not be described in detail herein.

Still referring to the embodiment of Fig. 1, the drive device configuration 22 in this embodiment includes a first actuator 24 configured with a first drive motor 26. The actuator may be, for example, a worm-gear actuator, or similar device, that is driven by an electric motor 26. The actuator 24 will move the solar panel arrays 12 in a first east-west control direction to track the sun's movement in an east-west direction. Within defined operational limits, the solar panels 12 are oriented by the actuator 24 such that the sensing face of the solar panels 12 is essentially perpendicular to the sun's incident rays 64 in order to maximize the output from the panels 12. The second actuator 28 and associated motor 30 may be utilized to orient the solar panels 12 along the north-south control axis to compensate for the sun's position in the sky with the changing seasons. Aspects of the active solar tracking system 40 in accordance with embodiments of the invention will be described in greater detail below.

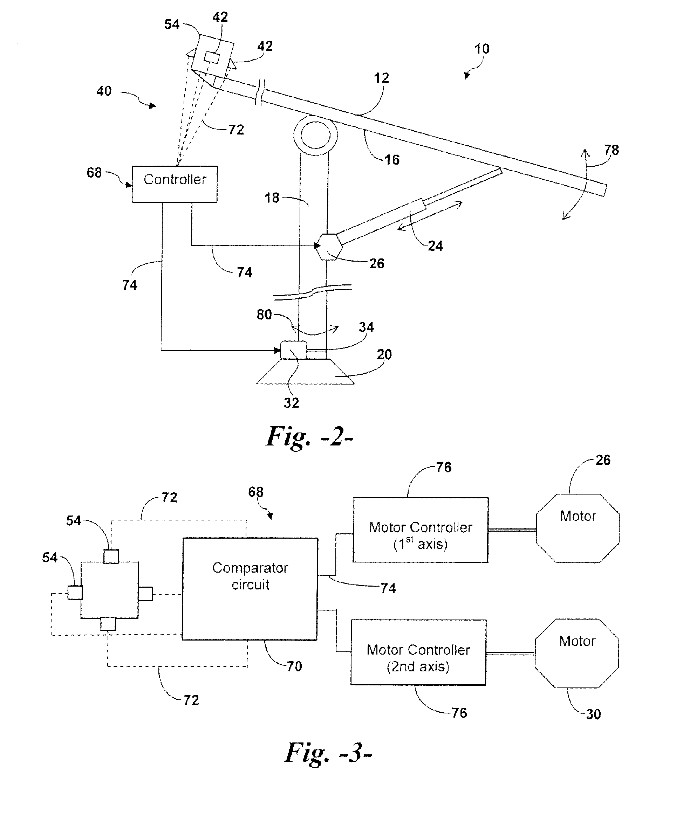

In the embodiment of the solar panel array 10 depicted in Fig. 2, the drive mechanism for positioning the solar panels 12 in the north-south control direction is a stepper motor 32 that is used to rotate the support pole 18. For example, the motor 32 engages a gear 34 on the pole to rotate the pole relative to the base 20. It should be readily appreciated that any manner of suitable drive mechanisms may be configured with the solar panel array 10 in order to provide independent movement of the solar panel array 12 in the east-west and north-south control directions. The invention is not limited to any particular type or configuration of drive mechanism.

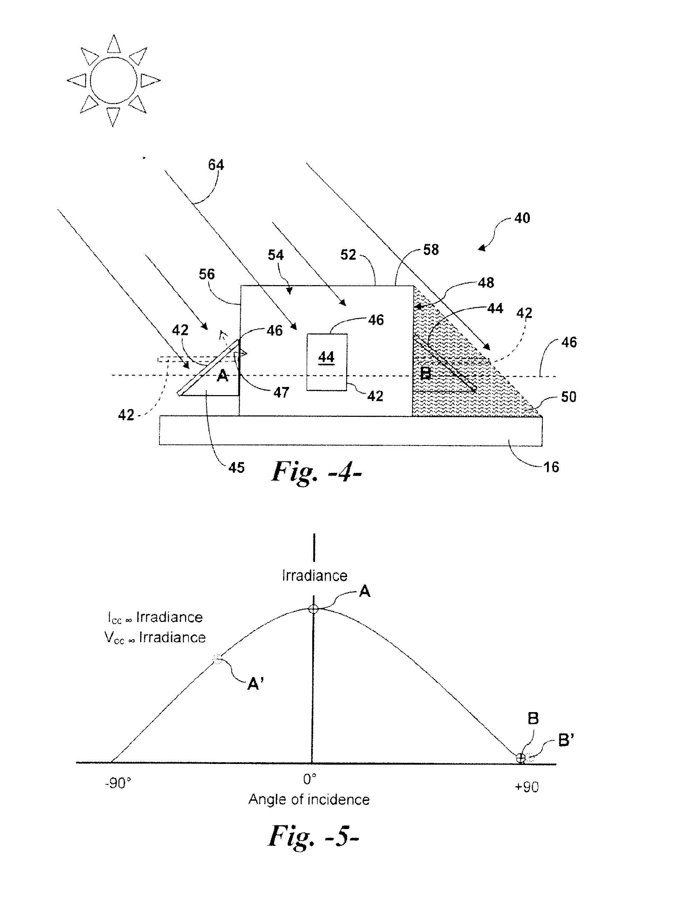

Referring to Fig. 2, an embodiment of the depicted active solar tracking system 40 includes a plurality of photovoltaic (PV) sensors 42. In a single-axis control system, at least two of the PV sensors 42 are disposed along a common axis 46 (Fig. 4) at opposite cardinal headings. In other words, the sensors 42 are oppositely oriented on a common axis 180° apart. In a dual-axis tracking system as depicted in Fig. 2, another set of the PV sensors 42 are oriented at opposite cardinal headings on a separate common axis such that the four PV sensors 2 are symmetrically spaced at 90° apart. The sensors 42 are configured at a location relative to the support structure 14 and solar panels 12 so as to be exposed to essentially the same solar irradiance conditions as the solar panels 12. In the illustrated embodiment, for example, the PV sensors 42 are provided on a support structure that is essentially coplanar with the solar panels 12.

Referring to Figs. 2 and 3, the solar panel array 10 includes a controller 68 that is in communication with each of the PV sensors 42. The sensors 42 generate a response signal 72 that is proportional to the solar irradiance experienced by the respective sensor 42. This control signal 72 may be, for example, an open-circuit voltage (V_{oc}) or a closed-circuit current (I_{cc}), or any other parameter that is proportional to the solar irradiance on the PV sensors 42. The controller 68 utilizes the response signals 72 to generate drive signals 74 for the respective motors 26, 30 via respective motor control circuits 76. For example, a first motor control circuit 76 and associated motor 26 may be configured for positioning the solar array along a first control axis, while a second motor controller 76 and associated motor 30 may be used for positioning the solar array 12 along the second control axis, as discussed above. The controller 68 may include a comparator circuit 70 to generate the drive signals 74 as a function of a differential value between the response signals 72 generated by the PV sensors 42 associated with the respective control axis, as discussed in greater detail below.

In desirable embodiments, the sensors 42 are photovoltaic sensors, as compared to photoresistive sensors conventionally used in solar tracking systems. A photoresistor-type of sensor is made of a high resistant semi-conductor material whose resistance decreases with increasing incident light intensity. These devices, however, produce a non-linear response curve and have response curve characteristics that vary from sensor to sensor. These inconsistencies and non-linear response degrade the accuracy of the tracking system. A photovoltaic sensor, on the other hand, is a device that converts light energy directly into DC electrical energy in the form of a voltage or current. These devices have an accurate linear response curve with consistent characteristics between different devices, thus increasing the accuracy of the active tracking system.

Although the invention is described herein as utilizing PV sensors 42, it should be appreciated that the invention may also have utility with other types of photosensors, including photoresistor-type of sensors. It is intended that the invention encompass these alternate sensor embodiments.

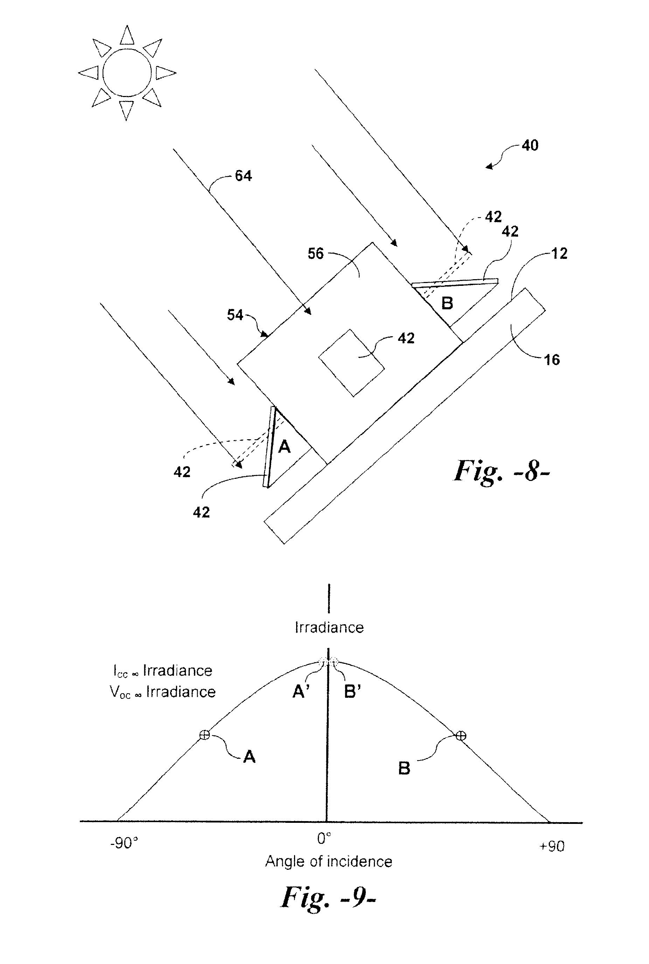

Referring to Figs. 4 and 5, components of the active solar tracking system 40 are depicted. In particular, the PV sensors 42 are oriented relative to respective shadow structures 48 such that at least one of the PV sensors 42 on the common axis 46 lies at least partially in a shadow (shaded area 50) cast by the shadow structure 48 at tilt angles of the PV sensors 42 that are on either side of a null position of the PV sensors. Referring to Fig. 8, the null position is the orientation of the sensors 42 such that the sensing faces of the respective sensors 42 are exposed to equal solar irradiance. For example, referring to Fig. 8, the null position in this embodiment is defined when the common axis of the sensors 42 lies essentially perpendicular to the direction of the sun's rays 64. In this orientation, the shadow structure 48 thus does not cast a shadow on either of the sensors 42.

Referring again to Fig. 4, the shadow structure 48 is defined by a wall 52 that is adjacent to each of the PV sensors 42. For example, the sensors 42 may be mounted directly onto individual respective walls 52 utilizing any manner or configuration of mounting bock 45 or other suitable support structure. In a particular embodiment illustrated in the figures, the PV sensors 42 are mounted onto a common sensor base 54, which may be a multi-sided structure having side walls 56 and a top wall 58. In the illustrated embodiment, the common sensor base 54 is a cube-like structure, with a respective PV sensor 42 mounted on each of the side walls 56. The sensors 42 are mounted at a height on the side walls 56 such that a portion of the side wall 56 above a top edge 46 of the sensors 42 defines the shadow structure 48, as particularly illustrated in Fig. 4.

The figures illustrate the sensors 42 as symmetrically configured on the side walls 56 of the common base 54 at respective cardinal headings. In an alternative embodiment, a central shadow structure 48 may be provided, such as a four-sided pillar, with the sensors 42 disposed symmetrically around the structure but supported by a different structure. For example, the sensors 42 may be mounted directly onto the upper surface of the solar panel 12 surrounding a central shadow structure 48 that also extends from the surface of the solar panel 12.

Referring again to Fig. 4, the sensors 42 may be disposed on the side walls 56 at any suitable angle for exposure to solar irradiance. This angle 47 may, for example, be in the range of from 30° to 90°. In the embodiment of Fig. 4, the sensors 42 are oriented at an angle 47 of about 45° relative to the plane of the side wall 56. The angle may be selected based on various considerations, including preventing the accumulation of debris, snow, water, and so forth, on the sensors 42.

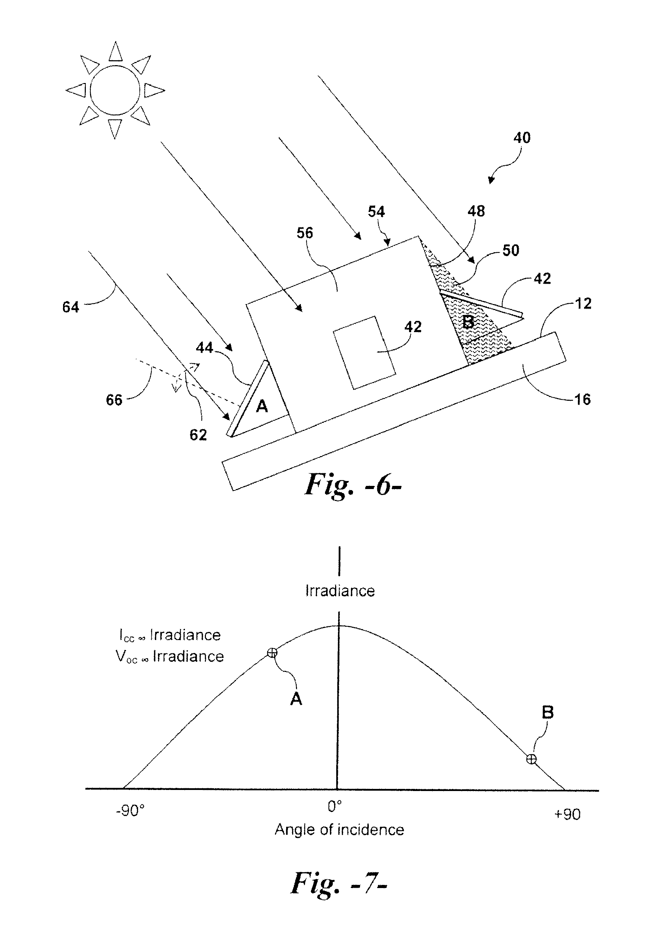

Fig. 5 is a curve of the response signal from the sensor 42 as a function of solar irradiance and angle of incidence of the sun's rays 64. Referring to Fig. 6, the angle of incidence 62 is defined as the angle between the sun's rays 64 and a plane 66 that is normal to the face of the sensor 42. The magnitude of the response signal (e.g., I_{cc} or V_{cc}) is proportional to the cosine (COS) function of the incidence angle 62, such that the response is at a maximum value when the incidence angle 62 is 0°, as depicted with the sensor 52 at location "A" in Fig. 4, and reflected on the curve in Fig. 5.

Fig. 4 also depicts a sensor 42 in dashed lines at position "A" that is essentially perpendicular to the side wall 56. In this angular orientation, the angle of incidence may be, for example, about 45°, resulting in a decreased magnitude of the response signal as depicted by the A' location on the curve in Fig. 5.

In Fig. 4, the sensor 42 at position "B" on the common base 54 is disposed at an angular orientation such that the incidence angle of the sun's rays 64 relative to a plane that is normal to the surface of the sensor 42 is essentially 90°. In other words, the sensing face 44 of the sensor 42 lies in a plane that is essentially parallel to the direction of the sun's rays 64. Thus, the magnitude of the response signal from this sensor 42 is negligible, as depicted in Fig. 5. The sensor at position "B" is also completely within the shaded region 50 cast by the shadow structure 48. However, even without the shadow structure 48, the response signal would still be negligible due to the angular orientation of the sensor 42.

Fig. 4 also depicts an alternate orientation of the sensor 42 at location "B" that is essentially perpendicular to the wall 56 such that the incidence angle would be about 45°, thereby generating a proportional response signal. However, even at this angular orientation, the sensor 42 lies completely within the shaded region cast by the shadow structure 48, thus, the response signal is negligible, as indicated by B' in Fig. 5.

Referring still to Figs. 4 and 5, the controller 68 (Fig. 3) generates a drive signal 74 that is proportional to the magnitude of the differential between the response signals from the respective sensors 42. As can be appreciated from Fig. 5, this differential magnitude is at a maximum value for the sensor conditions and orientation of Fig. 4. The controller 68 will generate a drive signal 74 (Fig. 3) for the appropriate motor controller to reduce the magnitude differential between the signals by orienting the sensors 42 towards the null position.

Figs. 6 and 7 depict the sensor configuration moved from the position of Fig. 5 towards the null position of Fig. 8. As the support structure 16 is rotated to the left (with associated solar panels 12 configured therewith), the incidence angle of the sensors 42 at positions A and B changes. The incidence angle 62 increases for the sensor at position A, and decreases for the sensor at position B. Also, the shadow area 50 generated at position B also decreases. Referring to Fig. 7, the magnitude of the response signal for the sensor 42 at position A is indicated as decreased relative to Fig. 5. Likewise, the magnitude of the response signal for sensor 42 at position B has increased relative to Fig. 5. However, the increase for the sensor 42 at position B is limited by the fact that a portion of the sensing face 44 of the sensor 42 at position B is within the shaded region 50. In other words, the response signal for the sensor at position B would be greater but for the shadow 50. It can thus be appreciated from the configuration of Figs. 6 and 7 that the shadow structure functions to limit the response signals generated by the respective sensors 42 in order to increase the magnitude of the differential between the response signals. By increasing this differential magnitude, the controller 68 is able to compute a more accurate correction signal (i.e. drive signal 74). The enhanced differential magnitude is easier to detect and measure in a feedback control loop that may be utilized by the controller 68, particularly considering the essentially linear response curves of the sensors 42.

Figs. 8 and 9 depict the solar panels 12 (and associated solar structure 16) at an angular orientation relative to sun's rays 64 such that the sensors 42 at positions A and B are at a null position wherein the respective sensors are exposed to equal solar irradiance. At this null position, the sensors 42 produce response signals of equal magnitude, as depicted in Fig. 9, and a drive signal is thus not generated by the controller 68.

Fig. 8 also depicts the alternate orientation of sensors 42 on the common base 40 in dashed lines. At this orientation, each of the sensors 42 has an incidence angle of essentially 0° and, thus, produces a maximum response signal, as indicated by A' and B' on the curve in Fig. 9.

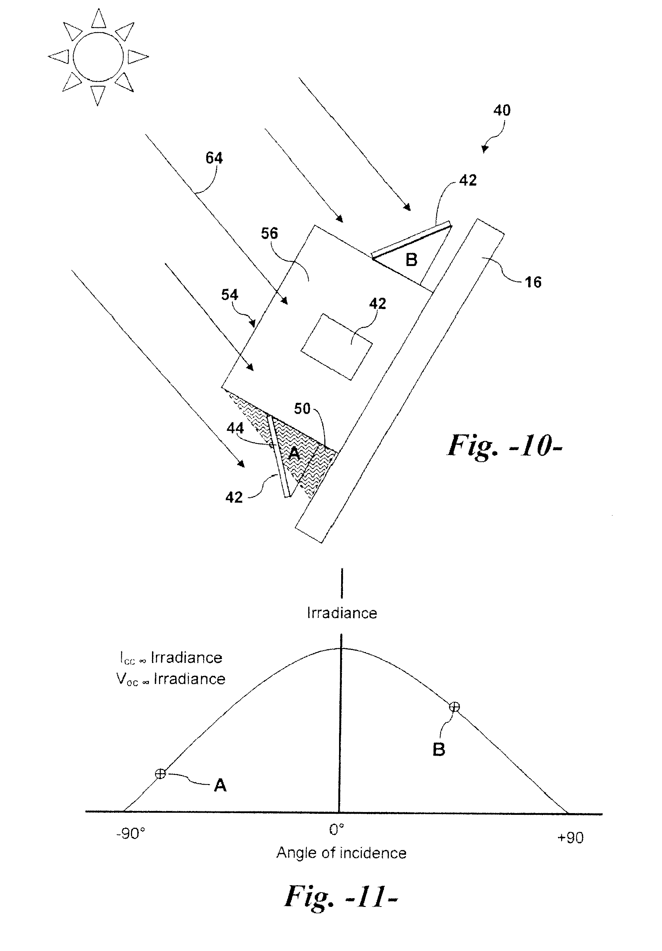

Figs 10 and 11 depict the position of the solar panel 12 and respective sensors 42 at an over-corrected orientation relative to Fig. 8. It can be appreciated from Fig. 10 that, as the common axis of the sensors at positions A and B is rotated or tilted left with respect to the sun's rays 64, that the magnitude of the response signal from the sensors 42 at position B will increase as the angle of incidence decreases. Likewise, the response from the sensor 42 at position A will decrease as the angle of incidence increases. In addition, the response from the sensors 42 at position A will be further limited by the induced shadow area 50, which results in a portion of the sensing face 44 being disposed in shade and, thus, "protected" from solar irradiance. The magnitude of the differential value between the two signals is thus increased due to the shadow effect on the sensor 42 at position A, as reflected in Fig. 11.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A solar tracking system (40) for active tracking of a solar panel array (10) relative to the sun's position, comprising:
at least two photovoltaic (PV) (42) sensors are disposed along a common axis (46) at opposite cardinal headings; and,
a shadow structure (48) configured with said PV sensors, wherein said PV sensors are oriented relative to said shadow structure such that one of said PV sensors lies at least partially in a shadow (50) cast by said shadow structure at tilt angles of said PV sensor on either side of a null position of said PV sensors, the null position defined when said PV sensors are exposed to equal solar irradiance (64).

2. The solar tracking system (40) of claim 1, wherein said shadow structure (48) comprises a wall (52) adjacent each of said PV sensors (42).

3. The solar tracking system (40) of claim 2, further comprising a common sensor base (54) having vertically oriented side walls (56), each said PV sensor (42) mounted to a respective side wall at a distance below a top edge of said side wall (56).

4. The solar tracking system (40) of claim 1, 2 or 3, wherein said system is a dual axis tracking system and further comprises four said PV sensors (42) at respective cardinal headings.

5. The solar tracking system (40) of claim 4, wherein said PV sensors (42) are disposed on said side walls (56) at an angle (47) relative to said side wall (56) in the range of from 30° to 90°, and preferably about 45°.

6. The solar tracking system (40) of any preceding claim, wherein the null position is defined when said common axis (46) of said PV sensors (42) is essentially perpendicular to the sun's rays (64).

7. The solar tracking system (40) of any preceding claim, further comprising a controller (68) in communication with said PV sensors (42), and a drive device (22) in communication with said controller, wherein said controller generates a drive signal (74) for said drive device as a function of a differential between signals (72) generated by said PV sensors (42) in response to solar irradiance (64) on said PV sensors.

8. The solar tracking system (40) of claim 7, wherein said PV sensors (42) are mounted to a solar panel (12), said drive device (22) configured to move said solar panel relative to a first control axis in response to the drive signal (74) in order to bring said PV sensors to the null position, wherein, preferably, said solar panel is positioned such that an angle of incidence (62) of solar rays (64) on said solar panel is essentially 0°.

9. The solar tracking system (40) of any preceding claim, further comprising a cube-shaped sensor base (54), said PV sensors mounted on opposite vertical side walls (56) of said sensor base (54).

10. An active-tracking solar panel array (10), comprising:
an array of one or mole solar panels (12) mounted on a support structure (14);
a drive device (22) configured with said support structure to move said array relative to a first control axis;
a tracking system (40), said tracking system further comprising:
a plurality of photovoltaic (PV) sensors (42) mounted relative to said support structure, wherein at least two said PV sensors are disposed along a common axis (46) at opposite cardinal headings;
a shadow structure (48) configured with said PV sensors, wherein said PV sensors are oriented relative to said shadow structure such that one of said PV sensors lies at least partially in a shadow (50) cast by said shadow structure at tilt angles of said PV sensor on either side of a null position of said PV sensors, the null position defined when said PV sensors are exposed to equal solar irradiance (64); and
a controller (68) in communication with said PV sensors and said drive device, said controller configured to generate a drive signal (74) for said drive device as a function of a measured differential between signals (72) generated by said PV sensors in response to solar irradiance (64) on said PV sensors.

11. The solar panel array (10) of claim 10, further comprising a common sensor base (54) having vertically oriented side walls (56), each said PV sensor (42) mounted to a respective said side wall at a distance below a top edge of said side wall, said side walls defining said shadow structure (48).

12. The solar panel array (10) of claim 11, wherein said sensor base (54) is mounted co-planar with said array of solar panels (12), said drive device (22) configured to move said array relative to a first control axis in response to the drive signal (74) such that said PV sensors (42) are in the null position and said array is positioned such that an angle of incidence (62) of solar rays (64) on said solar panels is essentially 0°.

13. The solar panel array (10) of claim 12, wherein said tracking system (40) is a single axis tracking system and comprises two of said PV sensors (42) at opposite cardinal headings on said sensor base (54).

14. The solar panel array (10) of claim 12 or claim 13, wherein said tracking system (40) is a dual axis tracking system and comprises four of said PV sensors (42) at cardinal headings on said sensor base (54), and further comprising an additional drive device (22) configured with said support structure (14) and in communication with said controller (68) to move said array relative to a second control axis.

15. The solar panel array (10) of claim 12, 13 or 13, wherein said PV sensors (42) are disposed on said side walls (56) at an angle (47) relative to said side wall in a range of from 30° to 90°.
